# EUROPÄISCHE PATENTANMELDUNG

(11) **EP 3 395 492 A1**
(43) Veröffentlichungstag der Anmeldung: **31.10.2018**
(21) Anmeldenummer: 18177465.4
(22) Anmeldetag: 13.09.2013
(51) Int. Cl.: B23K 26/08, G02B 7/182

(54) **LASERBEARBEITUNGSVORRICHTUNG**

(30) Priorität: 14.09.2012 EP 12184531
(62) Teilanmeldung aus: 13762129.8
(71) Anmelder: TRUMPF Schweiz AG, 7214 Grüsch (CH)
(72) Erfinder: ZIOLEK, Carsten, 7212 Sewis Dorf (CH); MARZENELL, Stefan, 7208 Malans (CH)
(74) Vertreter: Prüfer & Partner mbB Patentanwälte · Rechtsanwälte

(57) **Zusammenfassung**

Eine Laserstrahlbearbeitungsvorrichtung (1) mit einer Laserstrahlquelle und einer Einrichtung (4) zum Auslenken eines Laserstrahls (2) der Laserstrahlquelle zum Bearbeiten eines Werkstücks wird bereitgestellt. Die Einrichtung weist einen Aufbaukörper (3), ein Bauelement (12) mit einer spiegelnden Oberfläche (15), ein flexibles Element (13), durch das das Bauelement (12) um einen Auslenkwinkel um eine beliebige Raumachse auslenkbar verbindbar ist, eine erste kraftausübende Komponente und mindestens eine zweite kraftausübende Komponente auf, wobei zumindest eine der kraftausübenden Komponenten (14, 17) derart ansteuerbar ist, dass sich die beiden kraftausübenden Komponenten (14, 17) in Abhängigkeit von der Ansteuerung anziehen oder abstoßen. Eine der kraftausübenden Komponenten (14, 17) ist mit dem Bauelement (12) gekoppelt und die beiden kraftausübenden Komponenten (14, 17) sind so angeordnet und wirken zusammen, dass das Bauelement (12) um die beliebige Raumachse um den Auslenkwinkel auslenkbar ist. Mit dieser Einrichtung kann eine Einrichtung zum Ablenken eines eine Fläche überstreichenden Laserstrahls bereitgestellt werden, die einen geringen Platzbedarf aufweist und die kostengünstig hergestellt und betrieben werden kann.

## Beschreibung

Die Erfindung bezieht sich auf eine Laserbearbeitungsvorrichtung zum Bearbeiten eines Werkstücks mit einer Einrichtung zum Ablenken eines Laserstrahls, insbesondere auf eine Laserbearbeitungsvorrichtung, die speziell zum Markieren eines Werkstücks verwendet wird.

Zum Markieren von Werkstücken sind Laserbearbeitungsvorrichtungen bekannt, in denen der Laserstrahl entsprechend der gewünschten aufzubringenden Markierung mittels einer Scanneroptik abgelenkt wird und auf das Werkstück fokussiert wird.

Die Scanneroptik weist zwei bewegliche Spiegel auf, die den Laserstrahl in zwei Richtungen ablenken. Der auf eine Oberfläche des Werkstücks auftreffende Laserstrahl markiert dann die Oberfläche. Eine Markierung, die z.B. durch eine sogenannte "Vektorbeschriftung" ausgeführt wird, besteht aus vielen aus Punkten aufgebauten Einzellinien oder beim Ausführen einer "Bitmapbeschriftung", bei der eine Fläche abgerastert wird, aus den aus einzelnen Punkten erzeugten Flächen. Dazu wird der Laserstrahl mit einer hohen Geschwindigkeit über das Werkstück geführt. Die Spiegel werden üblicherweise mittels sogenannter Galvos, nämlich Galvanometer, die jeweils einen auf einer magnetisch angetriebenen Achse vorgesehenen Spiegel aufweisen, bewegt. Durch das Anlegen einer Spannung an Spulen wird ein Magnetfeld erzeugt und die Achse, die einen Permanentmagnet aufweist, wird entsprechend der Stromstärke gegen eine Feder verdreht, wodurch der Spiegel ausgelenkt wird (moving magnet). Es gibt auch die Möglichkeit, dass der Magnet fest angebracht ist und die Spule bewegt wird (moving coil).

Die Erfassung einer Orientierung des Spiegels, also eines Verdrehwinkels des Spiegels, kann über einen Detektor, beispielsweise einen Fotosensor, erfolgen.

Aus dem prinzipiellen Aufbau der Galvos ergibt sich, dass für eine flächige Bearbeitung des Werkstücks mindestens zwei Galvos mit jeweils einem Spiegel erforderlich sind. Dies ist mit einem erhöhten Platzbedarf und höheren Kosten verbunden, da mehrere Bauteile erforderlich sind und der Strombedarf der Galvos hoch ist und eine entsprechende Ansteuerung erfordert.

Ein weiterer Nachteil ist es, dass für jeden Galvo ein eigenes Positionserfassungssystem für die jeweilige Achse erforderlich ist.

Es ist Aufgabe der Erfindung, die obigen Nachteile auszuräumen und eine Laserbearbeitungsvorrichtung mit einer Einrichtung zum Ablenken eines eine Fläche überstreichenden Laserstrahls bereitzustellen, die einen geringen Platzbedarf hat und die kostengünstig hergestellt und betrieben werden kann.

Die Aufgabe wird durch eine Laserbearbeitungsvorrichtung gemäß Anspruch 1 gelöst. Weiterentwicklungen der Erfindung sind Gegenstand der Unteransprüche.

Durch die Ausbildung der Laserbearbeitungsvorrichtung gemäß einem Aspekt der Erfindung kann eine Ablenkeinheit aus einem Aufbaukörper, einem Bauelement, das eine spiegelnde Oberfläche und eine erste kraftausübende Komponente aufweist, und aus mindestens einer zweiten kraftausübenden Komponente, die mit der ersten kraftausübenden Komponente zusammenwirkt, so dass das Bauelement um eine beliebige Raumachse auslenkbar ist, kompakt und kostengünstig aufgebaut werden. Dabei ist die spiegelnde Fläche so auslenkbar, dass ein durch die spiegelnde Fläche abgelenkter Laserstrahl eine Fläche überstreichen kann. Dadurch ist es möglich, ein zu der Einrichtung ortsfestes Werkstück zweidimensional zu markieren. Durch die geringen bewegten Massen ist für einen Betrieb nur ein geringer Strom erforderlich.

Die Erfindung wird mittels Ausführungsformen an Hand der beigefügten Zeichnungen erklärt.
- Fig. 1: zeigt eine Prinzipdarstellung einer Laserbearbeitungsvorrichtung mit einer ersten Ausführungsform einer Einrichtung zum Ablenken des Laserstrahls;
- Fig. 2: zeigt eine Prinzipdarstellung einer weiteren Ausführungsform der Laserbearbeitungsvorrichtung mit der Einrichtung zum Ablenken des Laserstrahls;
- Fig. 3: zeigt eine vergrößerte Schnittansicht der Einrichtung zum Ablenken eines Laserstrahls aus Fig. 1 oder 2;
- Fig. 4: zeigt eine Prinzipdarstellung einer weiteren Ausführungsform der Laserbearbeitungsvorrichtung, bei der ein Laserresonator und die Einrichtung zum Ablenken des Laserstrahls auf einer gemeinsamen Aufbauplatte angeordnet sind;
- Fig. 5: zeigt eine Prinzipdarstellung noch einer weiteren Ausführungsform der Laserbearbeitungsvorrichtung mit einer zweiten Ausführungsform der Einrichtung zum Ablenken des Laserstrahls;
- Fig. 6: zeigt eine schematische Darstellung eines Bereichs einer dritten Ausführungsform der Einrichtung zum Ablenken des Laserstrahls;
- Fig. 7A: zeigt ein Ergebnis einer Schrittantwort eines Scanners auf ein Ansteuersignal ohne eine Vorkompensation; und
- Fig. 7B: zeigt ein Ergebnis der Schrittantwort des Scanners auf ein Ansteuersignal mit der Vorkompensation.

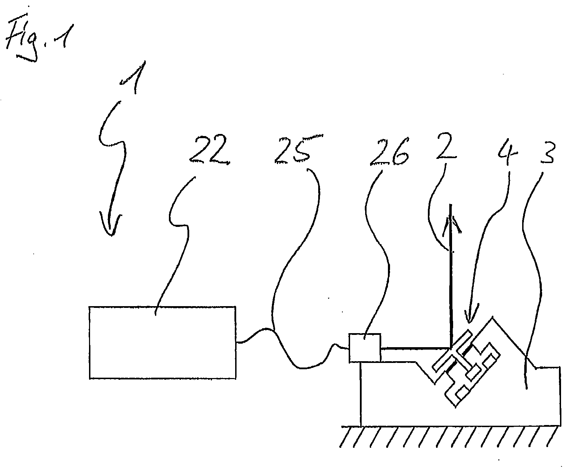

Fig. 1 zeigt eine Prinzipdarstellung einer Laserbearbeitungsvorrichtung 1 mit einer Laserstrahlquelle 22 und mit einer ersten Ausführungsform einer Einrichtung 4 zum Ablenken eines Laserstrahls 2. Die Laserstrahlquelle 22 ist hier ein Festkörperlaser in Form eines Faserlasers, kann alternativ aber auch z.B. ein Scheiben- oder Stablaser sein. In einer weiteren alternativen Ausführungsform ist die Laserstrahlquelle 22 als ein Gaslaser ausgebildet.

Die Laserbearbeitungsvorrichtung 1 in Fig. 1 weist eine Transportfaser 25 auf, die den Laserstrahl 2 über eine Auskoppeloptik auf die Ablenkeinrichtung 4 lenkt. Die Ablenkeinrichtung 4 und eine Auskoppeloptik 26, z.B. eine Kollimationsoptik, sind auf einer gemeinsamen Aufbauplatte 3 angeordnet. Alternativ kann die Auskoppeloptik 26 auch auf einer separaten Aufbauplatte angeordnet sein.

In Fig. 1 ist die Transportfaser 25 für einen Laserlichttransport gezeigt. Alternativ kann auch eine Freistrahlkopplung zwischen der Laserstrahlquelle 22 und der Ablenkeinrichtung 4 vorhanden sein.

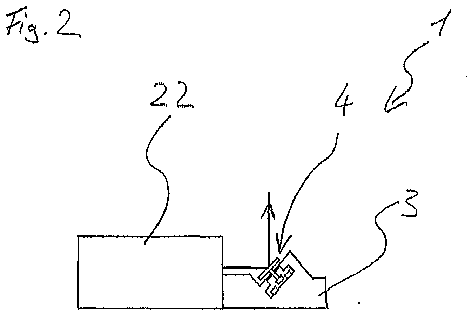

Fig. 2 zeigt eine weitere Ausführungsform der Laserbearbeitungsvorrichtung 1. Hier ist im Unterschied zu der Laserbearbeitungsvorrichtung 1 in Fig. 1 die Ablenkeinrichtung 4 nicht räumlich von der Laserstrahlquelle 22 separiert sondern die Aufbauplatte 3 der Ablenkeinrichtung 4 ist an der Laserstrahlquelle 22 angebracht, z.B. angeschraubt oder geklebt. Die Auskoppeloptik kann hierbei in der Laserstrahlquelle integriert sein.

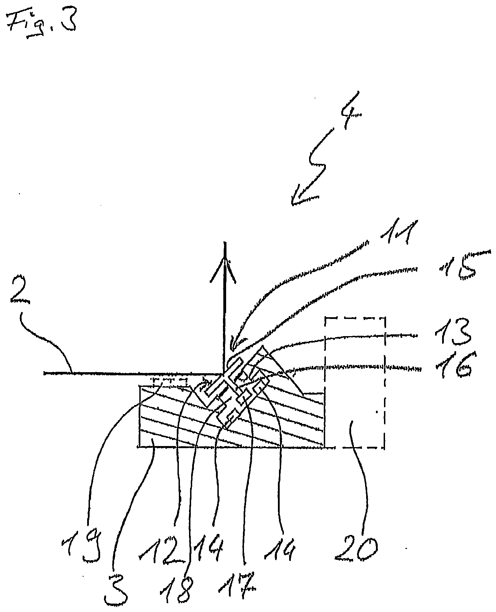

Fig. 3 zeigt eine vergrößerte Schnittansicht der Einrichtung 4 zum Ablenken des Laserstrahls 2 aus Fig. 1 oder 2. Die Einrichtung 4 weist den Aufbaukörper 3 auf. Eine kompakte Ablenkeinheit 11 enthält ein Bauelement 12, ein flexibles Element 13, und zwei Spulenpaare 14 als stromdurchflossene Elemente.

Der Aufbaukörper 3 wird bearbeitet, z.B. teilweise vergoldet und strukturiert. Des Weiteren werden sogenannte MEMS-Bauteile (Micro-Electro-Mechanical-Systems), aus denen Teile der Einrichtung 4 optional bestehen, separat hergestellt. Es handelt sich hierbei um einen Hybridaufbau, der sowohl aus Teilen, die mit MEMS-Techniken hergestellt sind, als auch aus "traditionell" hergestellten Teilen, also mittels spanender oder spanloser Formgebung hergestellten Teilen, besteht.

Die sogenannten MEMS-Bauteile umfassen im Wesentlichen das Bauelement 12, das eine spiegelnde Oberfläche 15 und ein Verbindungselement 16 umfasst, und das flexible Element 13. Das Bauelement 12 besteht zumindest im Bereich der spiegelnden Oberfläche 15 aus Quarzglas und weist eine dielektrische Beschichtung auf. Alternativ kann der Bereich der spiegelnden Oberfläche 15 auch aus Silizium, Keramik oder Metall bestehen und/oder eine metallische Beschichtung aufweisen. Die dielektrische/metallische Beschichtung ist auf der spiegelnden Oberfläche 15 vorgesehen, kann aber alternativ auch noch zusätzlich auf der gegenüberliegenden Seite vorhanden sein.

Durch den Herstellungsprozess wird in dem Aufbaukörper 3 eine Kammer 18 gebildet. Die Kammer 18 nimmt die stromdurchflossenen Elemente 14, das flexible Element 13 und das Verbindungselement 16 mit einem Magnet als eine erste kraftausübende Komponente 17 auf. Alternativ muss nicht zwingend eine Kammer 18 gebildet sein, sondern es kann lediglich ein Bauraum vorgesehen sein, in dem die Elemente angeordnet sein können.

Die spiegelnde Oberfläche 15 muss möglichst groß sein, so dass ein möglichst großer Laserspot umgelenkt werden kann, um dann einen kleinen Laserspot auf dem Werkstück erzeugen zu können. Je größer die spiegelnde Oberfläche 15 ist, umso größer ist jedoch auch die träge Masse des Bauelements 12, wodurch größere Bewegungskräfte erforderlich werden. Dadurch werden verstärkte Antriebselemente, also die stromdurchflossenen Elemente 14 und/oder der Magnet erforderlich. Die Breite und Länge der quadratischen spiegelnden Oberfläche 15 des Bauelements 12 betragen hier 7,5 mm x 7,5 mm. Alternativ betragen sie mindestens 2 mm x 2 mm aber weniger als 15 mm x 15 mm, und bevorzugt weniger als 10 mm x 10 mm. Da der Laserstrahl 2 unter einem Winkel auftrifft, der keinen senkrechten Einfall ergibt, ergibt sich der Laserspot auf der spiegelnden Oberfläche 15 nicht kreisrund sondern im Wesentlichen elliptisch. Um die spiegelnde Oberfläche 15 so klein wie möglich und so groß wie nötigt zu gestalten, kann deshalb die spiegelnde Oberfläche 15 auch eine elliptische, kreisförmige oder eine andere geeignete Form und eine andere Abmessung aufweisen. Eine Form und Abmessungen der spiegelnden Oberfläche 15 entsprechen dann einer vorbestimmten Form und maximalen Abmessungen des Laserspots. Die spiegelnde Oberfläche ist eben, kann aber alternativ auch gekrümmt ausgebildet sein.

Das Bauelement 12 ist des Weiteren mit dem Verbindungselement 16 versehen. Das Verbindungselement 16 ist in einem der spiegelnden Fläche 15 abgewandten Bereich angeordnet. Das Verbindungselement 16 weist in einem der spiegelnden Fläche 15 gegenüberliegenden Bereich, hier am Ende, den Magnet 17 auf. Der Magnet 17 ist aber alternativ nicht zwingend am Ende des Verbindungselements 16 vorgesehen, sondern kann an einer beliebigen Stelle des Verbindungselements 16 oder an einer anderen geeigneten Stelle an dem Bauelement 12 vorgesehen sein. Alternativ können auch mehrere Magnete an beliebigen Stellen angeordnet werden.

Das Verbindungselement 16 ist über das flexible Element 13 mit dem Aufbaukörper 3 verbunden. Das flexible Element 13 ist als ein Federelement ausgeführt, das das Verbindungselement 16 mit dem Aufbaukörper 3 verbindet. Das flexible Element 13 ist unterhalb der spiegelnden Oberfläche 15 angeordnet. Das flexible Element 13 kann weiterhin alternativ zu der Anordnung unterhalb der spiegelnden Oberfläche 15 auch seitlich von der spiegelnden Oberfläche 15 angeordnet sein. Dadurch verringert sich die Höhe der Einrichtung 4. Durch das Vorsehen des flexiblen Elements 13 ist das Bauelement 12 um eine beliebige Raumachse schwenkbar.

Das Schwenken um die beliebige Raumachse herum kann als ein Schwenken um eine Achse oder ein überlagertes Schwenken um zwei Achsen eines Raumkoordinatensystems verstanden werden, wobei keine der Achsen senkrecht auf der spiegelnden Oberfläche 15 angeordnet ist. Dies würde lediglich zu einer Drehung der spiegelnden Oberfläche 15 führen, ohne dass eine Ablenkung des Laserstrahls 2 geändert wird. Durch das Schwenken um die beliebige Raumachse wird ein Auslenken des Bauelements 12, und damit der spiegelnden Oberfläche 15, um einen Auslenkwinkel ermöglicht. Dies ermöglicht die Ablenkung des Laserstrahls 2 auf einen beliebigen Punkt auf einer Fläche, die durch den Schwenkbereich der spiegelnden Oberfläche 15 begrenzt ist.

Ein erstes Spulenpaar 14 besteht aus zwei Spulen, die sich bezüglich des Magneten 17 in einer Ebene gegenüberliegen. Wenn es mit Strom durchflossen ist, bildet das erste Spulenpaar 14 somit ein resultierendes Magnetfeld mit einer Achse. Ein weiteres Spulenpaar 14 ist so gedreht, dass die Achse des Magnetfelds des weiteren Spulenpaars 14 parallel zu der Ebene, in der das erste Spulenpaar 14 angeordnet ist, um 90° verdreht ist, so dass die Spulenpaare 14 senkrecht zueinander verdreht angeordnet sind. Alternativ sind auch mehrere Spulenpaare 14 möglich und die Spulenpaare 14 müssen nicht senkrecht zueinander verdreht sein, sondern können einen anderen geeigneten Winkel zueinander einschließen. Wesentlich ist, dass der Magnet 17 von den durch die Spulenpaare 14 gebildeten Magnetfeldern so ausgelenkt werden kann, dass das Bauelement 12 um die beliebige Raumachse herum um den Auslenkwinkel schwenkbar ist. Die Änderung des optischen Ablenkwinkels des Laserstrahls 2 beträgt mindestens ± 10° und in einer alternativen Ausführungsform bevorzugt ± 20°. Daraus ergibt sich ein Auslenkwinkel der spiegelnden Oberfläche 15 von ±5° bzw. bevorzugt ±10°.

Die Spulenpaare 14 sind unterhalb der spiegelnden Oberfläche 15 angeordnet, können jedoch alternativ auch seitlich von der spiegelnden Oberfläche 15 angeordnet sein, um die Höhe der Einrichtung 4 zum Umlenken des Laserstrahls 2 zu verringern.

Die Spulenpaare 14 werden so angesteuert, dass das Bauelement 12 und somit die spiegelnde Oberfläche 15 nicht resonant schwingt, so dass ein vorbestimmter Auslenkwinkel einstellbar ist.

In einem Fall, in dem an den Spulenpaaren 14 hohe Ströme angelegt werden, wird die Wärmeentwicklung so groß, dass es zu Fehlfunktion oder Zerstörung der Ablenkeinrichtung 4 kommen kann. Um jedoch bei Bedarf mit höheren Strömen arbeiten zu können, wird optional eine Vorrichtung, mit der aktiv ein Temperaturgradient unterhalb der Spulenpaare 14 erzeugt wird, vorgesehen. Beispielsweise kann diese Vorrichtung ein Peltierelement sein, welches direkt unter der Spule angebracht wird. Alternativ kann eine wasserdurchflossene Aufbauplatte 9 verwendet werden.

Als eine zweite kraftausübende Komponente 14 sind als Alternative zu den zwei Spulenpaaren 14 auch parallele Leiterbahnen als die stromdurchflossenen Elemente möglich. In diesen beiden Ausführungsformen wird die Ablenkung magnetisch hervorgerufen. In einer weiteren alternativen Ausführungsform ist eine elektrische Ablenkung über ein erstes elektrostatisch aufladbares Bauteil, z.B. einen über das flexible Element 13 aufgeladenen Zylinder, anstelle des Magneten als die erste kraftausübende Komponente 17, und als die zweite kraftausübende Komponente 14 über ein zweites elektrostatisch aufladbares Bauteil, z.B. ein anders geladenes Zylinderelement, anstelle der Spulenpaare auch denkbar. Wesentlich ist, dass mindestens eine von der ersten kraftausübenden Komponente 17 und der zweiten kraftausübenden Komponente 14 mit dem Bauelement 12 gekoppelt ist und mindestens eine der beiden kraftausübenden Komponenten 14, 17 so angepasst ist, dass sie ansteuerbar ist, so dass sich die beiden kraftausübenden Komponenten in Abhängigkeit von der Ansteuerung anziehen oder abstoßen.

Die Einrichtung 4 ist optional mit einem Winkelerfassungsmittel 19 versehen. Das Winkelerfassungsmittel 19 ist ein sogenannter PSD (Position Sensitive Detector). Der PSD erfasst eine Position eines separaten Hilfslaserstrahls, der von der spiegelnden Oberfläche 15 oder von einer Rückseite davon abgelenkt wird, auf einer Fläche. Durch die Position des separaten Hilfslaserstrahls kann ein tatsächlicher Auslenkwinkel der spiegelnden Oberfläche 15 durch das Winkelerfassungsmittel 19 bestimmt werden. Alternativ kann das Winkelerfassungsmittel 19 auch Veränderungen der Induktivität der Spulen der Spulenpaare 14 zur Bestimmung des Auslenkwinkels verwenden. Als eine weitere Alternative kann die Winkeländerung auch durch die Positionsänderung des Magneten, z.B. mittels Hallsensoren, bestimmt werden. Weitere Alternativen für eine Winkelerfassungsvorrichtung 19 sind entweder das Vorsehen von einer LED anstelle der Hilfslaserstrahlquelle und von einer Photodiode, oder das Vorsehen eines piezoresistiven Sensors.

Weiterhin ist die Einrichtung 4 zum Auslenken des Laserstrahls 2 optional mit einer Auslenkwinkelkorrektursteuerungsvorrichtung 20 versehen. Die Auslenkwinkelkorrektursteuerungsvorrichtung 20 steuert die Spulenpaare 14 so an, dass der vorbestimmte Auslenkwinkel des Bauelements 12 erreicht wird.

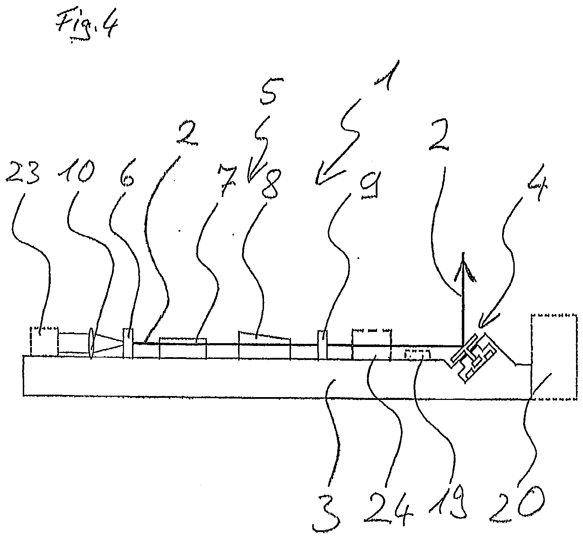

Fig. 4 zeigt eine Prinzipdarstellung einer weiteren Ausführungsform der Laserbearbeitungsvorrichtung 1 mit einem stabförmigen Festkörpermedium als aktives Medium und mit der Einrichtung 4 zum Ablenken des Laserstrahls 2. Die Laserbearbeitungsvorrichtung 1 weist hier den Aufbaukörper 3 auf, auf dem ein Laserresonator 5 angeordnet ist, und der die Einrichtung 4 aufweist.

Der Laserresonator 5 weist als Bauteile einen HR-Endspiegel 6, ein Festkörper-Lasermedium 7, einen Güteschalter 8 und einen Auskoppelspiegel 9 auf. Optional ist eine Frequenzkonversion des Laserstrahls 2 möglich, um mit anderen Wellenlängen zu arbeiten und damit unterschiedliche Materialien optimal zu bearbeiten.

Durch eine Pumpstrahlquelle 23, die optional ebenfalls auf dem Aufbaukörper 3 angeordnet ist, wird eine Pumpstrahlung erzeugt und zu dem Laserresonator 5 abgestrahlt. Zur Fokussierung der Pumpstrahlung in den Laserresonator 5 weist die Laserbearbeitungsvorrichtung 1 eine Linse 10 aus Quarzglas auf. Die Linse 10 kann alternativ auch aus einem anderen Material oder auch als eine GRIN-Linse, also eine Gradientenindex-Linse, ausgeführt sein. Alternativ kann hier eine Pumpstrahlquelle vorgesehen sein, die mittels einer Faser mit dem Laserresonator 5 gekoppelt ist.

Das Festkörper-Lasermedium 7 besteht aus Yb:YAG, also einem Ytterbium dotierten Yttrium-Aluminium-Granat-Laser, oder alternativ aus Nd:YAG oder Nd:Vanadat. Alternativ ist auch ein Festkörper-Lasermedium 7 aus Yb:Vanadat oder einem anderen laseraktiven Material möglich.

Der Auskoppelspiegel 9 ist ein separates optisches Mittel, das auf der dem Lasermedium zugewandten Stirnseite eine dielektrische Beschichtung aufweist. Die dielektrische Beschichtung ist für Laserlicht teilreflektierend.

Bei Lasern mit Pulserzeugung weist der Resonator optional einen Güteschalter 8 zur Bildung eines intensiven und sehr kurzen Laserpulses auf. Der Güteschalter 8 ist hier ein akustooptischer Modulator. Alternativ kann der Güteschalter 8 ein elektrooptischer Modulator sein. Alternativ sind auch andere Arten der Pulserzeugung und damit eine Verwendung anderer optischer Elemente, wie z.B. passive Modenkopplung mit Hilfe eines sättigbaren Absorbers im Resonator, denkbar.

Die optischen Komponenten, also die Linse 10, der HR-Endspiegel 6, das Festkörper-Lasermedium 7, der Güteschalter 8 und der Auskoppelspiegel 9 sind auf dem Aufbaukörper 3 mittels Löten befestigt. Alternativ besteht auch die Möglichkeit, die optischen Komponenten beispielsweise mittels Kleben, Laserschweißen, Klemmen oder Anschrauben mit dem Aufbaukörper 3 zu verbinden.

Der Aufbaukörper 3 besteht aus einem dotierten Silikatglas (Zerodur) . Alternativ ist auch Glaskeramik (z.B. ULE - Ultra Low Expansion Titanium-Silicatglas) oder Keramik (z.B. Aluminiumoxid, Aluminiumnitrid oder Siliziumoxid) möglich. Diese Materialien weisen einen sehr niedrigen thermischen Ausdehnungskoeffizienten auf. Dadurch kann die Anordnung des Laserresonators 5 temperaturstabil aufgebaut werden. Auch in dieser Ausführungsform kann optional die vorangehend erwähnte Vorrichtung zur Erzeugung des Temperaturgradienten vorgesehen sein.

Die Einrichtung 4 zum Ablenken des Laserstrahls 2 ist in dieser Ausführungsform in dem Aufbaukörper 3, auf dem der Laserresonator 5 aufgebaut ist, integriert. Dadurch herrschen die gleichen thermischen Bedingungen wie in dem Laserresonator 5, wodurch die gesamte Laserbearbeitungsvorrichtung 1 temperaturstabil aufgebaut werden kann, so dass eine tatsächliche Zielposition des Laserstrahls 2 im Wesentlichen einer vorbestimmten Zielposition entspricht.

Durch die Integration der Einrichtung 4 zum Ablenken des Laserstrahls 2 in den Aufbaukörper 3 ist es grundsätzlich möglich, den Aufbaukörper 3 sowohl für das Erzeugen des Laserresonators 5 als auch für das Herstellen der Einrichtung 4 in gleichen Arbeitsgängen zu bearbeiten. Handlingseinrichtungen und Greifer, die beim Positionieren der optischen Komponenten des Laserresonators 5 verwendet werden, können grundsätzlich ebenfalls für ein Zusammenfügen der MEMS- und Nicht-MEMS-Bauteile verwendet werden.

Optional sind auch in dieser Ausführungsform die Winkelerfassungsmittel 19 und die Auslenkwinkelkorrektursteuerungsvorrichtung 20 vorgesehen.

Als eine weitere Option ist die Laserbearbeitungsvorrichtung 1 mit einer Strahlformungseinheit 24, die optische Komponenten zur Beeinflussung des Laserstrahls aufweist, versehen. Die Strahlformungseinheit 24 ist hier nur prinzipiell dargestellt und kann Komponenten aufweisen, die bezüglich des Laserstrahls sowohl vor der spiegelnden Oberfläche 15 als auch danach angeordnet sind. Damit wird beispielsweise der Laserstrahl vor der spiegelnden Oberfläche 15 aufgeweitet und nach der spiegelnden Oberfläche 15 auf das Werkstück fokussiert.

Des Weiteren können die optischen Komponenten des Laserresonators oder der Strahlformungseinheit derart ausgestaltet sein, dass Astigmatismus, z.B. durch eine Kombination von Zylinderlinsen, korrigiert werden kann.

Die Laserbearbeitungsvorrichtung 1 kann einen oder mehrere Faltungsspiegel (Umlenkspiegel) aufweisen, wobei der Einfallswinkel auf die spiegelnde Oberfläche 15 in einem Bereich von 10° - 80° liegt.

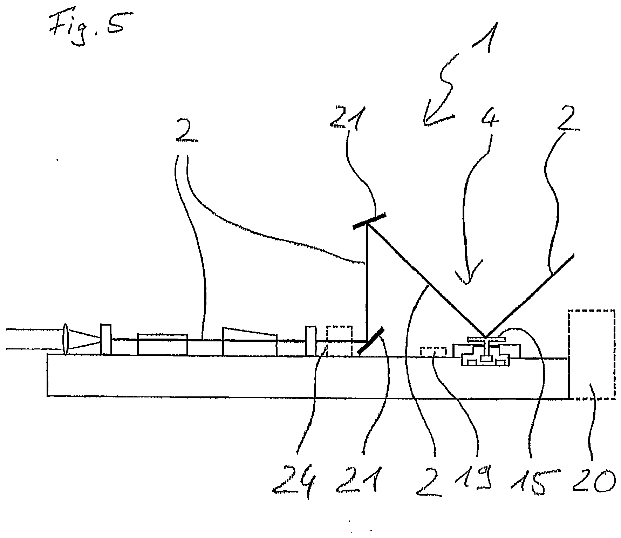

Als Beispiel ist in Fig. 5 die Laserbearbeitungsvorrichtung 1 mit einer zweiten Ausführungsform der Einrichtung 4 zum Ablenken eines Laserstrahls 2 gezeigt. Der Unterschied zu der in Fig. 4 gezeigten Ausführungsform ist, dass der Laserstrahl 2 mittels zweier Umlenkspiegel 21 umgelenkt (gefaltet) wird, bevor der Laserstrahl 2 auf die spiegelnde Oberfläche 15 trifft und von dort abgelenkt wird. Hierbei ist die Anordnung der Elemente der Einrichtung 4 so, dass die MEMS-Bauteile günstiger montiert werden können als bei den in Fig. 1 bis 4 gezeigten Ausführungsformen. Die Anzahl der Umlenkspiegel 21 ist alternativ nicht auf zwei Umlenkspiegel 21 festgelegt, sondern kann eine andere geeignete Anzahl sein. Alternativ können die Umlenkspiegel auch in einer Ebene parallel zu der Oberseite des Aufbaukörpers 3 angeordnet sein.

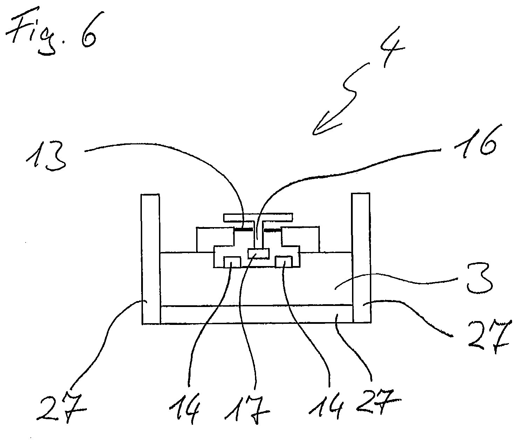

In Fig. 6 ist ein Bereich einer dritten Ausführungsform der Einrichtung 4 zum Ablenken des Laserstrahls schematisch gezeigt. Um die Einrichtung 4 ist hier eine Abschirmung 27 angebracht. Bei der Abschirmung 27 handelt es sich um eine Schicht eines Materials mit hoher magnetischer Permeabilität (Eisen, Mu-Metall (weichmagnetische Nickel-Eisenlegierung), etc.). Durch die Abschirmung 27 wird das durch den Magnet 17 und/oder die stromdurchflossenen Elemente 14 erzeugte Magnetfeld im Aufbaukörper 3, der aus einem nicht magnetisierbaren Material besteht, nicht durch äußere Magnetfelder beeinflusst.

Da der Magnet 17 durch diese Schicht angezogen wird, ist die Abschirmung 27 in genügendem Abstand und konzentrisch zum Magneten 17 vorgesehen. Die Kraft, die zwischen dem Magnet 17 und Abschirmung 27 wirkt, sollte so klein sein, dass sich das flexible Element 13, das über das Verbindungselement 16 mit dem Magneten 17 verbunden ist, nicht zu stark verformt. In einer bevorzugten Ausführungsform ist der Abstand der Abschirmung 27 vom Magnet 17 kleiner als 20 mm, und in einer besonders bevorzugten Ausführungsform ist der Abstand kleiner als 10 mm, um die Vorrichtung möglichst kompakt zu halten.

Sämtliche vorgenannten alternativen Ausführungsformen sind im Wesentlichen kombinierbar, sofern keine technischen und/oder wirtschaftlichen Gründe dagegen sprechen.

Im Betrieb wird entweder durch die Laserstrahlquelle 22 ein Laserstrahl 2 erzeugt, oder es wird durch die Pumpstrahlquelle 23 ein sogenanntes Pumplicht erzeugt, das durch die Linse 10 in den Laserresonator 5 fokussiert wird, wodurch ein Laserstrahl 2 erzeugt wird. Nach dem Einstellen des vorbestimmten Auslenkwinkels der spiegelnden Oberfläche 15 mittels einer nicht gezeigten Steuerungsvorrichtung der Laserbearbeitungsvorrichtung 1 und Einschalten des Laserstrahls 2 durch die Steuerungsvorrichtung der Laserbearbeitungsvorrichtung 1 wird der Laserstrahl 2 durch die spiegelnde Oberfläche 15 des Bauelements 12 um den vorbestimmten Ablenkwinkel abgelenkt und auf ein Werkstück geführt oder auf das Werkstück fokussiert. Der vorbestimmte Ablenkwinkel des Laserstrahls 2 wird durch Einstellen des Auslenkwinkels des Bauelements 12 mittels der Steuerungsvorrichtung der Laserbearbeitungsvorrichtung 1 über ein Ansteuern der Stromstärke durch die Spulenpaare 14, die das Bauelement 12 mittels des Magneten 17 auslenken, eingestellt.

Im weiteren Verlauf der Bearbeitung wird die Auslenkung der spiegelnden Oberfläche 15 mittels der Spulenpaare 14 dann so angesteuert, dass ein von der spiegelnden Oberfläche 15 des Bauelements 12 abgelenkter Laserstrahl 2, von der Steuerungsvorrichtung der Laserbearbeitungsvorrichtung 1 angesteuert, einen vorbestimmten Bahnabschnitt abfährt. Nach dem Abfahren des vorbestimmten Bahnabschnitts wird der Laserstrahl 2 wieder ausgeschaltet. Dieses Abfahren wird entweder von Punkt zu Punkt gesteuert oder eine definierte Bahnkurve wird abgefahren. Somit kann durch eine Synchronisation eines Ein- und Ausschaltens oder einer Leistungsmodulierung des Laserstrahls 2 und der Auslenkung des Bauteils 12 auf dem Werkstück eine gewünschte Markierung aufgebracht werden. Das Werkstück kann relativ zu der Einrichtung entweder ortsfest sein oder relativ dazu bewegbar sein.

Wenn die Auslenkwinkelkorrektursteuerungsvorrichtung 20 vorhanden ist, wird die von dem Winkelerfassungsmittel 19 erfasste tatsächliche Position so verarbeitet, dass Abweichungen zwischen der tatsächlichen Position und der vorbestimmten Position, oder der erfassten Bahnkurve von der vorbestimmten Bahnkurve, ermittelt werden, und korrigierte Ströme an die Spulenpaare 14 ausgegeben werden. Somit wird die tatsächliche Position/Bahnkurve auf die vorbestimmte Position/Bahnkurve korrigiert, so dass ein Feedbacksystem für eine Genauigkeit der Bewegung vorhanden ist.

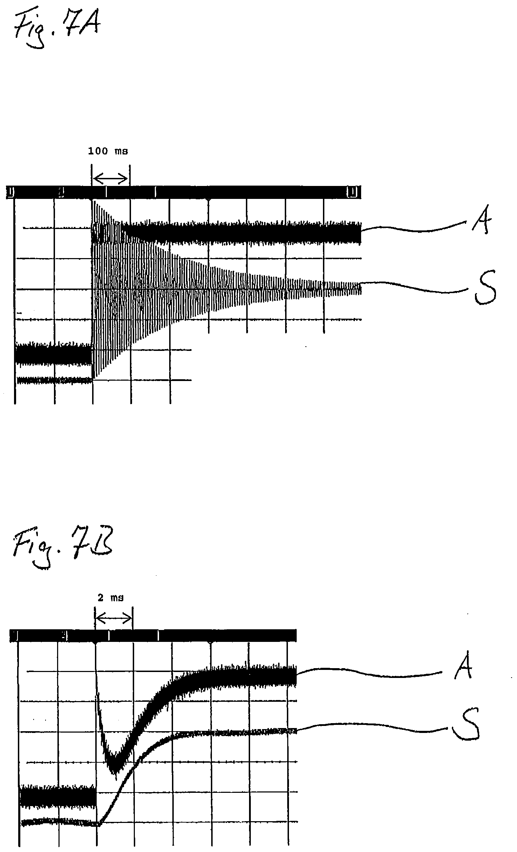

Um eine schnellere Schrittantwort des Scanners auf ein Ansteuersignal A zu ermöglichen, kann eine Vorkompensation des Ansteuersignals A vorgenommen werden. Das Ansteuersignal A wird durch eine Steuerspannung gebildet. Die Vorkompensation kann z.B. gemäß der Veröffentlichung "Sub-100 µs Settling Time and Low Voltage Operation for Gimbal-less Two-Axis Scanners", Veljko Millanovic and Kenneth Castelino, in IEEE/LEOS Optical MEMS 2004, Takamatsu, Japan, Aug. 2004 durchgeführt werden. Fig. 7A zeigt ein Ergebnis einer Schrittantwort S ohne die Vorkompensation und Fig. 7B zeigt ein Ergebnis der Schrittantwort S mit der Vorkompensation. Die Schrittantwort S wird über ein PSD-Signal erfasst. Wie hier zu sehen ist, kann bei einem beispielhaften 4x4 mm Spiegel, der eine Resonanzfrequenz von 164 Hz aufweist und mit 80 mA betrieben wird, der Scannerspiegel anstatt in 700 ms ohne Vorkompensation (Fig. 7A), bei einer entsprechenden Vorkompensation (Fig. 7B) in 5 ms in einen gewünschten Winkel gebracht werden, d.h. das Lasersignal an eine gewünschte Position innerhalb des Bearbeitungsfeldes gelenkt werden.

Eine alternative Verwendung ist auch bei einer Mikrobearbeitung oder bei einem Rapid-Prototyping denkbar.

Nachfolgend sind Beispiele für Laserbearbeitungsvorrichtungen 1 und eines Verfahrens zum Aufbringen einer Lasermarkierung auf einem Werkstück aufgeführt.

Laserbearbeitungsvorrichtung 1 zum Bearbeiten eines Werkstücks, gemäß eines ersten Beispiels mit
einer Laserstrahlquelle 22 und
einer Einrichtung 4 zum Ablenken eines Laserstrahls 2 der Laserstrahlquelle 22, aufweisend:
   einen Aufbaukörper 3,
   ein Bauelement 12 mit einer spiegelnden Oberfläche 15,
   ein flexibles Element 13, durch das das Bauelement 12 mit dem Aufbaukörper 3 direkt verbindbar ist, wobei das Bauelement 12 um eine beliebige Raumachse um einen Auslenkwinkel auslenkbar ist,
   eine erste kraftausübende Komponente 17 und mindestens eine zweite kraftausübende Komponente 14, wobei zumindest eine der kraftausübenden Komponenten 14, 17 derart ansteuerbar ist, dass sich die beiden kraftausübenden Komponenten 14, 17 in Abhängigkeit von der Ansteuerung anziehen oder abstoßen,
wobei eine der kraftausübenden Komponenten 14, 17 mit dem Bauelement 12 gekoppelt ist und die beiden kraftausübenden Komponenten 14, 17 so angeordnet sind und zusammenwirken, dass das Bauelement 12 um die beliebige Raumachse um einen vorbestimmten Auslenkwinkel auslenkbar ist.

Zweites Beispiel der Laserbearbeitungsvorrichtung 1 mit den Merkmalen des ersten Beispiels, wobei die erste kraftausübende Komponente 17 mindestens ein Magnet oder mindestens ein erstes elektrostatisch aufladbares Bauteil ist, und wobei die zweite kraftausübende Komponente 14 mindestens ein stromdurchflossenes Element mit einem elektromagnetischen Kraftfeld oder mindestens ein zweites elektrostatisch aufladbares Bauteil ist.

Drittes Beispiel der Laserbearbeitungsvorrichtung 1 mit den Merkmalen des ersten oder zweiten Beispiels, wobei die Einrichtung 4 aufweist:
ein Winkelerfassungsmittel 19 zum Erfassen eines tatsächlichen Auslenkwinkels, um den das Bauelement 12 ausgelenkt ist, und
eine Auslenkwinkelkorrektursteuerungsvorrichtung 20 zum Steuern eines Auslenkens des Bauelements 12 in Abhängigkeit von dem vorbestimmten Auslenkwinkel und dem tatsächlichen Auslenkwinkel, so dass der tatsächliche Auslenkwinkel dem vorbestimmten Auslenkwinkel entspricht.

Viertes Beispiel der Laserbearbeitungsvorrichtung 1 mit den Merkmalen eines der vorangehenden Beispiele, wobei die erste kraftausübende Komponente 17 an dem Bauelement 12 in einem der spiegelnden Oberfläche 15 abgewandten Bereich angeordnet ist.

Fünftes Beispiel der Laserbearbeitungsvorrichtung 1 mit den Merkmalen eines der vorangehenden Beispiele, wobei die erste kraftausübende Komponente 17 an einem Verbindungselement 16 des Bauelements 12 angeordnet ist.

Sechstes Beispiel der Laserbearbeitungsvorrichtung 1 mit den Merkmalen von einem von dem ersten bis vierten Beispiel, wobei die erste kraftausübende Komponente 17 an dem Bauelement 12 seitlich von der spiegelnden Oberfläche angeordnet ist.

Siebtes Beispiel der Laserbearbeitungsvorrichtung 1 mit den Merkmalen eines der vorangehenden Beispiele, wobei die zweite kraftausübende Komponente 14 seitlich der spiegelnden Oberfläche 15 angeordnet ist.

Achtes Beispiel der Laserbearbeitungsvorrichtung 1 mit den Merkmalen von einem von dem ersten bis sechsten Beispiele, wobei die zweite kraftausübende Komponente 14 unterhalb der spiegelnden Oberfläche angeordnet ist.

Neuntes Beispiel der Laserbearbeitungsvorrichtung 1 mit den Merkmalen des zweiten Beispiels oder des zweiten Beispiels und von einem von dem dritten bis achten Beispiel, wobei mindestens zwei stromdurchflossene Elemente bzw. zweite elektrostatisch aufladbare Bauteile vorgesehen sind, die senkrecht zueinander verdreht angeordnet sind.

Zehntes Beispiel der Laserbearbeitungsvorrichtung 1 mit den Merkmalen eines der vorangehenden Beispiele, wobei das flexible Element 13 unterhalb der spiegelnden Oberfläche 15 angeordnet ist.

Elftes Beispiel der Laserbearbeitungsvorrichtung 1 mit den Merkmalen von einem von dem ersten bis neunten Beispiel, wobei das flexible Element 13 seitlich der spiegelnden Oberfläche 15 angeordnet ist.

Zwölftes Beispiel der Laserbearbeitungsvorrichtung 1 mit den Merkmalen eines der vorangehenden Beispiele, wobei der Auslenkwinkel der spiegelnden Oberfläche 15 mindestens ± 5°, bevorzugt mindestens ± 10° beträgt.

Dreizehntes Beispiel der Laserbearbeitungsvorrichtung 1 mit den Merkmalen eines der vorangehenden Beispiele, wobei sie ferner ein optisches Mittel zum Fokussieren des Laserstrahls 2 auf das Werkstück aufweist.

Vierzehntes Beispiel der Laserbearbeitungsvorrichtung 1 mit den Merkmalen eines der vorangehenden Beispiele, wobei der auf die spiegelnde Oberfläche 15 auftreffende Laserstrahl 2 einen Laserspot mit einer vorbestimmten Form und maximalen vorbestimmten Abmessungen bildet, und wobei die spiegelnde Oberfläche 15 eine Form und Abmessungen aufweist, die im Wesentlichen der vorbestimmten Form und den maximalen Abmessungen des Laserspots entsprechen.

Fünfzehntes Beispiel der Laserbearbeitungsvorrichtung 1 mit den Merkmalen eines der vorangehenden Beispiele, wobei sie MEMS-Bauteile aufweist.

Sechzehntes Beispiel der Laserbearbeitungsvorrichtung 1 mit den Merkmalen eines der vorangehenden Beispiele, wobei sie eine Steuerungsvorrichtung zum Ansteuern eines Ein- und Ausschaltens des Laserstrahls 2 und zum Ansteuern eines Auslenkens um den vorbestimmten Auslenkwinkel aufweist, so dass ein vorbestimmter Bahnabschnitt mit dem Laserstrahl 2 auf dem Werkstück abfahrbar ist.

Siebzehntes Beispiel der Laserbearbeitungsvorrichtung 1 mit den Merkmalen eines der vorangehenden Beispiele,
wobei sie einen auf dem Aufbaukörper 3 angebrachten Laserresonator 5 aufweist.

Achtzehntes Beispiel der Laserbearbeitungsvorrichtung 1 mit den Merkmalen eines der vorangehenden Beispiele, wobei die Laserbearbeitungsvorrichtung 1 eine Lasermarkierungsvorrichtung ist.

Ein Beispiel eines Verfahrens zum Aufbringen einer Lasermarkierung auf einem Werkstück mit einer Laserbearbeitungsvorrichtung 1 mit den Merkmalen des achtzehnten Beispiels weist die folgenden Schritte auf:
Einstellen des vorbestimmten Auslenkwinkels der spiegelnden Oberfläche 15 durch Ansteuern der ersten und/oder zweiten kraftausübenden Komponente 14, 17;
Einschalten eines Laserstrahls 2 mittels einer Steuerungsvorrichtung der Laserbearbeitungsvorrichtung 1;
Ansteuern der ersten und/oder zweiten kraftausübenden Komponente 14, 17 so, dass der Laserstrahl 2 auf dem Werkstück einen vorbestimmten Bahnabschnitt abfährt;
Ausschalten des Laserstrahls 2 mittels der Steuerungsvorrichtung der Laserbearbeitungsvorrichtung 1.

## Patentansprüche

1. Laserbearbeitungsvorrichtung (1) zum Bearbeiten eines Werkstücks, mit
einer Laserstrahlquelle (22) und
einer Einrichtung (4) zum Ablenken eines Laserstrahls (2) der Laserstrahlquelle (22), aufweisend:
einen Aufbaukörper (3),
ein Bauelement (12) mit einer spiegelnden Oberfläche (15),
ein flexibles Element (13), durch das das Bauelement (12) mit dem Aufbaukörper (3) direkt verbindbar ist, wobei das Bauelement (12) um eine beliebige Raumachse um einen Auslenkwinkel auslenkbar ist,
eine erste kraftausübende Komponente (17) und mindestens eine zweite kraftausübende Komponente (14), wobei zumindest eine der kraftausübenden Komponenten (14, 17) derart ansteuerbar ist, dass sich die beiden kraftausübenden Komponenten (14, 17) in Abhängigkeit von der Ansteuerung anziehen oder abstoßen,
wobei eine der kraftausübenden Komponenten (14, 17) mit dem Bauelement (12) gekoppelt ist und die beiden kraftausübenden Komponenten (14, 17) so angeordnet sind und zusammenwirken, dass das Bauelement (12) um die beliebige Raumachse um einen vorbestimmten Auslenkwinkel auslenkbar ist, und
das Bauelement (12) im Bereich der spiegelnden Oberfläche (15) sowie auf einer gegenüberliegenden Seite eine di-elektrische Beschichtung aufweist.

2. Laserbearbeitungsvorrichtung (1) gemäß Anspruch 1, wobei die erste kraftausübende Komponente (17) mindestens ein Magnet oder mindestens ein erstes elektrostatisch aufladbares Bauteil ist, und wobei die zweite kraftausübende Komponente (14) mindestens ein stromdurchflossenes Element mit einem elektromagnetischen Kraftfeld oder mindestens ein zweites elektrostatisch aufladbares Bauteil ist.

3. Laserbearbeitungsvorrichtung (1) gemäß Anspruch 1 oder 2, wobei die Einrichtung (4) aufweist:
ein Winkelerfassungsmittel (19) zum Erfassen eines tatsächlichen Auslenkwinkels, um den das Bauelement (12) ausgelenkt ist, und
eine Auslenkwinkelkorrektursteuerungsvorrichtung (20) zum Steuern eines Auslenkens des Bauelements (12) in Abhängigkeit von dem vorbestimmten Auslenkwinkel und dem tatsächlichen Auslenkwinkel, so dass der tatsächliche Auslenkwinkel dem vorbestimmten Auslenkwinkel entspricht.

4. Laserbearbeitungsvorrichtung (1) gemäß einem der vorangehenden Ansprüche, wobei die erste kraftausübende Komponente (17) an dem Bauelement (12) in einem der spiegelnden Oberfläche (15) abgewandten Bereich angeordnet ist.

5. Laserbearbeitungsvorrichtung (1) gemäß einem der vorangehenden Ansprüche, wobei die erste kraftausübende Komponente (17) an einem Verbindungselement (16) des Bauelements (12) angeordnet ist.

6. Laserbearbeitungsvorrichtung (1) gemäß Anspruch 1 bis 4, wobei die erste kraftausübende Komponente (17) an dem Bauelement (12) seitlich von der spiegelnden Oberfläche angeordnet ist.

7. Laserbearbeitungsvorrichtung (1) gemäß einem der vorangehenden Ansprüche, wobei die zweite kraftausübende Komponente (14) seitlich der spiegelnden Oberfläche (15) angeordnet ist.

8. Laserbearbeitungsvorrichtung (1) gemäß Anspruch 1 bis 6, wobei die zweite kraftausübende Komponente (14) unterhalb der spiegelnden Oberfläche angeordnet ist.

9. Laserbearbeitungsvorrichtung (1) gemäß Anspruch 2 oder Anspruch 2 und einem der Ansprüche 3 bis 8, wobei mindestens zwei stromdurchflossene Elemente bzw. zweite elektrostatisch aufladbare Bauteile vorgesehen sind, die senkrecht zueinander verdreht angeordnet sind.

10. Laserbearbeitungsvorrichtung (1) gemäß einem der vorangehenden Ansprüche, wobei das flexible Element (13) unterhalb der spiegelnden Oberfläche (15) angeordnet ist.

11. Laserbearbeitungsvorrichtung (1) gemäß einem Ansprüche 1 bis 9, wobei das flexible Element (13) seitlich der spiegelnden Oberfläche (15) angeordnet ist.

12. Laserbearbeitungsvorrichtung (1) gemäß einem der vorangehenden Ansprüche, wobei der Auslenkwinkel der spiegelnden Oberfläche (15) mindestens ± 5°, bevorzugt mindestens ± 10° beträgt.

13. Laserbearbeitungsvorrichtung (1) gemäß einem der vorangehenden Ansprüche, wobei sie ferner ein optisches Mittel zum Fokussieren des Laserstrahls (2) auf das Werkstück aufweist.

14. Laserbearbeitungsvorrichtung (1) gemäß einem der vorangehenden Ansprüche, wobei der auf die spiegelnde Oberfläche (15) auftreffende Laserstrahl (2) einen Laserspot mit einer vorbestimmten Form und maximalen vorbestimmten Abmessungen bildet, und wobei die spiegelnde Oberfläche (15) eine Form und Abmessungen aufweist, die im Wesentlichen der vorbestimmten Form und den maximalen Abmessungen des Laserspots entsprechen.

15. Laserbearbeitungsvorrichtung (1) gemäß einem der vorangehenden Ansprüche, wobei sie MEMS-Bauteile aufweist.

16. Laserbearbeitungsvorrichtung (1) gemäß einem der vorangehenden Ansprüche, wobei sie eine Steuerungsvorrichtung zum Ansteuern eines Ein- und Ausschaltens des Laserstrahls (2) und zum Ansteuern eines Auslenkens um den vorbestimmten Auslenkwinkel aufweist, so dass ein vorbestimmter Bahnabschnitt mit dem Laserstrahl (2) auf dem Werkstück abfahrbar ist.

17. Laserbearbeitungsvorrichtung (1) gemäß einem der vorangehenden Ansprüche,
wobei sie einen auf dem Aufbaukörper (3) angebrachten Laserresonator (5) aufweist.

18. Laserbearbeitungsvorrichtung (1) gemäß einem der vorangehenden Ansprüche, wobei die Laserbearbeitungsvorrichtung (1) eine Lasermarkierungsvorrichtung ist.

19. Verfahren zum Aufbringen einer Lasermarkierung auf einem Werkstück mit einer Laserbearbeitungsvorrichtung (1) gemäß Anspruch 18, das die Schritte aufweist:
Einstellen des vorbestimmten Auslenkwinkels der spiegelnden Oberfläche (15) durch Ansteuern der ersten und/oder zweiten kraftausübenden Komponente (14, 17);
Einschalten eines Laserstrahls (2) mittels einer Steuerungsvorrichtung der Laserbearbeitungsvorrichtung (1);
Ansteuern der ersten und/oder zweiten kraftausübenden Komponente (14, 17) so, dass der Laserstrahl (2) auf dem Werkstück einen vorbestimmten Bahnabschnitt abfährt;
Ausschalten des Laserstrahls (2) mittels der Steuerungsvorrichtung der Laserbearbeitungsvorrichtung (1).
